# EUROPÄISCHE PATENTSCHRIFT

(11) **EP 3 696 516 B1**
(45) Veröffentlichungstag und Bekanntmachung des Hinweises auf die Patenterteilung: **27.04.2022**
(21) Anmeldenummer: 19157746.9
(22) Anmeldetag: 18.02.2019
(51) Int. Cl.: G01F 23/284, G01S 13/88, G01S 7/03

(54) **RADARMODUL**
RADAR MODULE
MODULE RADAR

(43) Veröffentlichungstag der Anmeldung: 19.08.2020
(73) Patentinhaber: VEGA Grieshaber KG, 77709 Wolfach (DE)
(72) Erfinder: MÜLLER, Christoph, 77728 Oppenau (DE); WÄLDE, Steffen, 78078 Niedereschach (DE)
(74) Vertreter: Maiwald Patent- und Rechtsanwaltsgesellschaft mbH

(56) Entgegenhaltungen:
- DE-A1-102007 042 043
- DE-A1-102015 119 690
- US-A1- 2013 057 366

## Beschreibung

### Gebiet der Erfindung

Die Erfindung betrifft ein Radarmodul zur Füllstands- und/oder Grenzstandüberwachung, beispielsweise in der Anlagenautomatisierung, die Verwendung eines Radarmoduls sowie ein Verfahren zur Herstellung eines Radarmoduls.

### Hintergrund der Erfindung

In der Anlagenautomatisierung, insbesondere in der Füllstand- und Grenzstandmesstechnik, werden eine Vielzahl von Radarmodulen eingesetzt. Um sicherzustellen, dass das Radarmodul voll funktionsfähig bleibt, können unterschiedliche Konfigurationen vorgesehen werden bzw. Schutzmaßnahmen getroffen werden. Der Halbleiterschaltkreis eines Radarmoduls ist aus kristallinem oder teilkristallinem Material hergestellt, welches empfindlich gegenüber Stößen oder Krafteinwirkungen sein kann. Zudem ist von außen dem Radarmodul nicht anzusehen, ob der Halbleiterschaltkreis beschädigt oder defekt ist, so dass bei der Ursachenforschung bei einem Ausfall des Radarmoduls alle Komponenten in Betracht gezogen werden müssen.

US 2013/057366 offenbart eine Mikrowellen-Sendevorrichtung zum Aussenden von Mikrowellen.

DE 10 2007 042043 offenbart eine Vorrichtung zur Ermittlung und Überwachung des Füllstands eines Füllguts in einem Behälter.

### Zusammenfassung

Mit den im Folgenden beschriebenen Ausführungsformen kann in vorteilhafter Weise ein verbessertes Radarmodul bereitgestellt werden.

Ein Aspekt betrifft ein Radarmodul zur Füllstands- und/oder Grenzstandüberwachung, insbesondere in der Anlagenautomatisierung, welche eine Radarsignalquelle, die eingerichtet ist zum Erzeugen, Aussenden und ggf.

Empfangen eines Radarsignals, umfasst. Dabei aufweist die Radarsignalquelle eine Oberfläche, welche einem Füllgut zugewandt ist, das das Radarmodul überwachen soll bzw. dessen Füll- und/oder Grenzstand das Radarmodul vermessen soll. Zudem umfasst das Radarmodul einen Radarsignalleiter, welcher dazu eingerichtet ist, das Radarsignal aufzunehmen, zu leiten und zu emittieren. Der Radarsignalleiter wird dabei an der Oberfläche der Radarsignalquelle befestigt. Zudem umfasst das Radarmodul eine Vergussmasse, wobei die Vergussmasse zumindest teilweise die Oberfläche der Radarsignalquelle und zumindest teilweise den Radarsignalleiter bedeckt. Zudem umfasst das Radarmodul (100) einen Träger (110), wobei die Radarsignalquelle (102) mittels der Vergussmasse (108) an dem Träger (110) festgelegt ist. Die Radarsignbalquelle kann als integrierte Schaltung (Die) auf einem Halbleiterchip ausgeführt sein.

Ein Vorteil dieser Ausführungsform kann sein, dass die Radarsignalquelle, insbesondere eine Antenne der Radarsignalquelle, mittels der Vergussmasse vor Feuchtigkeit oder anderen Umwelteinflüssen geschützt wird. Zudem kann ein Vorteil sein, dass mittels der Vergussmasse der Radarsignalleiter an der Radarsignalquelle befestigt werden kann. Zudem kann sich der Vorteil ausbilden, dass mittels der Kontaktierung des Radarsignalleiters an der Radarsignalquelle mit der Vergussmasse ein Montageschritt eingespart werden kann und somit die Kosten des Radarmoduls gesenkt werden können.

In anderen Worten wird ein Radarsignalleiter auf einer Radarsignalquelle gehalten, indem die Vergussmasse die beiden Komponenten miteinander kontaktiert. Dabei kann die Radarsignalquelle ein Radarsignal erzeugen und/oder aussenden, wobei der Radarsignalleiter das Radarsignal aufnehmen kann, durch sich hindurchleiten und anschließend wieder emittieren kann, insbesondere in Richtung eines Füllguts. Dabei kann der Radarsignalleiter ebenso dazu ausgelegt sein, in eine Antennenanordnung die Radarsignale einzukoppeln. Des Weiteren kann der Radarsignalleiter ein Ende aufweisen, welches einem Füllgut abgewandt ist, wobei dieses Ende an der Radarsignalquelle zumindest teilweise befestigt ist. Zumindest teilweise befestigt bedeutet in diesem Ausführungsbeispiel, dass der Radarsignalleiter eine durchgehende Kontaktfläche zur Radarsignalquelle ausbildet, und/oder nur eine teilweise Kontaktfläche zur Radarsignalquelle ausbildet, insbesondere wenn eine Art Fuß den Radarsignalleiter über der Radarsignalquelle in einem definierten Abstand positioniert. Bei der Vergussmasse kann es sich um einen Schaum, ein Gel oder einen Kunststoffverbund handeln, welcher mittels einem Verfahren wie Spritzen oder Kunststoffspritzgießen in das Radarmodul eingebracht wird. Dabei kann die Vergussmasse insbesondere eine Verbindungswirkung entfalten, so dass der Radarsignalleiter und die Radarsignalquelle an der Vergussmasse anheften. Die Vergussmasse kann insbesondere dazu ausgelegt sein, die Radarsignalquelle und/oder den Radarsignalleiter vor Umwelteinflüssen, wie beispielsweise Feuchtigkeit oder Ähnlichem, zu schützen. Zudem kann die Vergussmasse dazu beitragen, dass die Stabilität der Radarsignalquelle verbessert wird sowie eine mechanische Einwirkung auf den Radarsignalleiter sich nicht negativ auf die Radarsignalquelle auswirkt.

Gemäß einem Ausführungsbeispiel kann die Vergussmasse den Radarsignalleiter an der Oberfläche der Radarsignalquelle fixieren. In anderen Worten kann die Vergussmasse eine form- und/oder stoffschlüssige Verbindung zwischen dem Radarsignalleiter und der Oberfläche der Radarsignalquelle ausbilden. Beispielhafterweise kann die Vergussmasse aus einem Kunststoffschaum bestehen, welcher auf die Oberfläche der Radarsignalquelle aufgetragen wird, wenn der Radarsignalleiter auf der Oberfläche der Radarsignalquelle montiert ist und dass die Vergussmasse somit den Radarsignalleiter auf der Radarsignalquelle fixiert. Dies kann den Vorteil mit sich bringen, dass ein weiterer Montageschritt, bspw. eine Verbindung zwischen dem Radarsignalleiter und der Radarsignalquelle, eingespart werden kann und somit die Herstellkosten des Radarmoduls reduziert werden können. Des Weiteren kann diese Ausführungsform den Vorteil aufweisen, dass die Radarsignalquelle, insbesondere eine Antennenanordnung der Radarsignalquelle, vor Umwelteinflüssen, wie beispielsweise Feuchtigkeit, geschützt ist.

Gemäß einem Ausführungsbeispiel kann eine Permittivität der Vergussmasse kleiner als eine Permittivität des Radarsignalleiters sein. In anderen Worten wird die Permittivität der Vergussmasse in Abhängigkeit des Radarsignalleiters gewählt, so dass die Permittivität der Vergussmasse kleiner als die Permittivität des Radarsignalleiters ist. Dies kann den vorteilhaften Effekt ausbilden, dass das Radarsignal, welches der Radarsignalleiter leitet und/oder emittiert, nicht in die Vergussmasse entkoppelt, sondern an der Spitze bzw. dem Füllgut zugewandten Seite des Radarsignalleiters emittiert wird bzw. in eine Antennenanordnung eingekoppelt werden kann.

Gemäß einem Ausführungsbeispiel umfasst das Radarmodul einen Träger, wobei die Radarsignalquelle mittels der Vergussmasse an dem Träger festgelegt ist. Bei dem Träger kann es sich um einen Chipträger, beispielsweise ein QFN-Gehäuse, handeln, wobei die Radarsignalquelle auf den Chipträger geklebt wird. Die Verbindung zwischen der Radarsignalquelle und dem Träger kann mittels der Vergussmasse erfolgen, so dass kein weiterer Klebstoff oder eine weitere Verbindung notwendig wird und somit die Effektivität des Montagevorgangs weiter gesteigert werden kann.

Gemäß einem Ausführungsbeispiel kann die Radarsignalquelle zusätzlich mittels einer stoff-, form- und/oder kraftschlüssigen Verbindung an dem Träger festgelegt sein. In anderen Worten wird die Radarsignalquelle lösbar oder unlösbar mit dem Träger, insbesondere einem Chipträger, verbunden. Dies kann zur mechanischen Stabilisierung der Radarsignalquelle beitragen. Zudem kann die Stoff-, formund/oder kraftschlüssige Verbindung durch die Vergussmasse gebildet werden. Alternativ kann die Stoff-, form- und/oder kraftschlüssige Verbindung auch mittels eines Lötvorgangs erfolgen, wobei die Radarsignalquelle an dem Träger festgelötet wird. In anderen Ausführungsformen können auch Technologien zur üblichen Kontaktierung von Radarsignalquellen an Trägern verwendet werden.

Gemäß einem Ausführungsbeispiel kann die form-, stoff- und/oder kraftschlüssige Verbindung durch die Vergussmasse gebildet sein, welche die Radarsignalquelle an dem Träger festlegt. In anderen Worten wird die Radarsignalquelle auf dem Träger positioniert und anschließend mittels der Vergussmasse an dem Träger befestigt. Dabei kann die Vergussmasse insbesondere auf der Oberfläche der Radarsignalquelle und auf dem Träger appliziert werden, so dass ein Übergang zwischen der Oberfläche der Radarsignalquelle und der Oberfläche des Trägers durch die Vergussmasse gebildet wird, welche die Radarsignalquelle an dem Träger festlegt. Dies kann den Vorteil mit sich bringen, dass eine Montage beispielsweise mittels einer Lötverbindung oder einer Schraubverbindung der Radarsignalquelle eingespart werden kann und somit die Fertigungskosten des Radarmoduls weiter reduziert werden können. Zudem kann sich der Vorteil ausbilden, dass durch die Vergussmasse keine Feuchtigkeit oder Ähnliches zwischen die Radarsignalquelle und den Träger gelangen kann und somit eine Korrosion der Unterseite der Radarsignalquelle bzw. der Oberseite des Trägers ausgeschlossen werden kann.

Gemäß einem Ausführungsbeispiel kann die Radarsignalquelle in Signalverbindung mit dem Träger stehen, insbesondere durch Bonddrähte. In Signalverbindung kann in diesem Ausführungsbeispiel bedeuten, dass die Radarsignalquelle mit dem Träger derart in Verbindung steht, dass eine Stromversorgung von dem Träger an die Radarsignalquelle gewährleistet werden kann. Zusätzlich kann in Signalverbindung bedeuten, dass Informations- und/oder Steuersignale von dem Träger an die Radarsignalquelle weitergeleitet werden können. Diese Signalverbindung kann mittels Bonddrähten oder anderen Verbindungstechniken, wie beispielsweise leitfähigem Digitaldruck, erfolgen. Insbesondere kann dies den Vorteil ausbilden, dass keine weiteren Kontaktierungsmechanismen notwendig werden, da durch die Bonddrähte ein einfaches und sicheres Verbindungsverfahren zur Verfügung steht, dass die Lebensdauer des Radarmoduls weiter erhöhen kann. Zudem kann die Vergussmasse auch die Bonddrähte vollständig umschließen, so dass keine Feuchtigkeit an die Bonddrähte gelangen kann.

Gemäß einem Ausführungsbeispiel kann das Radarmodul ein Gehäuse umfassen, wobei das Gehäuse zumindest die Oberfläche der Radarsignalquelle und/oder den Träger umhaust. In anderen Worten kann das Gehäuse des Radarmoduls die Radarsignalquelle und den Träger umhausen bzw. bedecken, so dass die Radarsignalquelle als auch der Träger vor Umwelteinflüssen geschützt ist. Zudem ist das Gehäuse derart ausgelegt, dass es zur mechanischen Stabilisierung dient. Dabei kann das Gehäuse dazu eingerichtet, Krafteinwirkungen auf das Radarmodul aufzunehmen und nicht an die Radarsignalquelle und/oder den Träger weiterzuleiten. Dies kann den Vorteil ausbilden, dass in gewissen Anwendungsszenarien das Radarmodul ohne das Gehäuse nicht geeignet wäre, doch durch die Vorsehung eines Gehäuses kann das Radarmodul den Anforderungen entsprechen und somit die Anwendungsmöglichkeiten des Radarmoduls verbessert werden.

Gemäß einem Ausführungsbeispiel kann die Vergussmasse die Radarsignalquelle und/oder den Träger mit dem Gehäuse verbinden. In anderen Worten wird die Radarsignalquelle auf dem Träger montiert und anschließend der Träger in dem Gehäuse. Anschließend kann eine Vergussmasse in das Radarmodul eingebracht werden, so dass die Vergussmasse die Radarsignalquelle, den Träger und das Gehäuse verbinden, insbesondere festlegen, kann. Dies kann den Vorteil mit sich bringen, dass Montageschritte eingespart werden können, da die Kontaktierung der Bauteile miteinander durch die Vergussmasse erfolgt und somit keine Einzelmontage, wie beispielsweise durch Lötverbindungen, mehr notwendig ist. Auch kann vorgesehen sein, dass die Vergussmasse nicht mit dem Gehäuse in Kontakt steht.

Gemäß einem Ausführungsbeispiel kann das Radarmodul einen Hohlleiter aufweisen, wobei der Hohlleiter eine Öffnung aufweist. Die Öffnung kann dabei eine Bohrung oder eine Extrusion aus einem Vollkörper sein. Die Öffnung bildet dabei eine Axialrichtung aus, beispielsweise bei einem Rohr die Mittelachse des Rohrs. Zudem kann der Radarsignalleiter in die Öffnung derart hineinragen, dass der Hohlleiter und der Radarsignalleiter entlang der Axialrichtung eine Überlappung ausbilden, um das Radarsignal aus dem Radarsignalleiter in den Hohlleiter einzukoppeln. In anderen Worten ist der Radarsignalleiter auf der Radarsignalquelle angeordnet, wobei der Radarsignalleiter in eine Öffnung eines Hohlleiters derart hineinragt, dass sich der Radarsignalleiter und der Hohlleiter überlappen. Die Überlappung kann dazu da sein, dass das Radarsignal, welches aus der Radarsignalquelle stammt und durch den Radarsignalleiter weitergeleitet wird, in den Hohlleiter eingekoppelt werden kann. Die Axialrichtung kann dabei insbesondere orthogonal zur Oberfläche der Radarsignalquelle ausgebildet sein. Dies kann den Vorteil mit sich bringen, dass die Einkopplung des Radarsignals in einen Hohlleiter derart verbessert wird, indem alle Komponenten mittels der Vergussmasse fixiert sind und somit ein robusteres Radarmodul insbesondere gegenüber Umwelteinflüssen bereitgestellt werden kann.

Gemäß einem Ausführungsbeispiel kann die Vergussmasse einen Kunststoffverbund, einen Kunstharzverbund, eine Folie und/oder eine mit Additiven versehene Folie aufweisen. In anderen Worten kann die Vergussmasse aus einem Kunstharz, welches mittels des Glob-Top-Verfahrens vergossen wurde, einem Kunststoffverbdung, welcher mittels Mikrospritzguss appliziert wurde, oder eine Folie, welche mittels eines FAM(Film Assisted Molding)-Verfahren appliziert wurde, ausgebildet werden. Zudem kann es sich bei dem Vergussmaterial um ein Gel, einen Schaum oder Ähnliches handeln. Der Vorteil dieser Ausführungsform kann sein, dass mittels eines hochautomatisierbaren Fertigungsverfahrens die Herstellungskosten des Radarmoduls weiter gesenkt werden können.

Gemäß einem Ausführungsbeispiel kann der Radarsignalleiter aus einem Dielektrikum, insbesondere einem Metallverbund und/oder einem Kunststoffverbund, hergestellt sein. Bei einem Dielektrikum kann es sich um ein Polyethylen, PTFE, Keramik, Steatit, Aluminiumoxid, oder Glimmer handeln. Alternativ kann der Radarsignalleiter auch als Drehteil oder Kunststoffspritzgießbauteil ausgeführt sein. Mittels der genannten Fertigungstechnologien lassen sich eine hohe Rentabilität gewährleisten, so dass sich mittels des derart gefertigten Radarsignalleiters die Kosten des Radarmoduls weiter senken lassen.

Ein weiterer Aspekt betrifft die Verwendung eines Radarmoduls, wie voranstehend und nachfolgend beschrieben, zur Füllstands- und/oder Grenzstandüberwachung in der Anlagenautomatisierung.

Ein weiterer Aspekt ist ein Verfahren zur Herstellung eines Radarmoduls, welches die Schritte aufweisen kann:
- Positionieren eines Radarsignalleiters über und/oder auf einer Radarsignalquelle,
- Aufbringen einer Vergussmasse zum zumindest teilweisen Bedecken des Radarsignalleiters und der Radarsignalquelle und zum Fixieren des Radarsignalleiters zur Radarsignalquelle,
- Positionieren der Radarsignalquelle auf einem Träger,
- Fixieren der Radarsignalquelle auf dem Träger mittels der Vergussmasse.

In anderen Worten wird ein Radarsignalleiter auf einer Radarsignalquelle positioniert, so dass der Radarsignalleiter insbesondere oberhalb einer Antennenanordnung positioniert ist. Sobald der Radarsignalleiter oberhalb der Radarsignalquelle positioniert ist, wird eine Vergussmasse aufgebracht, welche zumindest teilweise die Radarsignalquelle und den Radarsignalleiter bedeckt. Dies dient insbesondere dazu, den Radarsignalleiter zur Radarsignalquelle zu fixieren bzw. festzulegen und somit dauerhaft zu positionieren. Dies kann den Vorteil ausbilden, dass ein weiterer Montageschritt, beispielsweise die Kontaktierung des Radarsignalleiters an der Radarsignalquelle mittels Lötens, eingespart werden kann, da die Vergussmasse derart ausgelegt ist, den Radarsignalleiter permanent bzw. dauerhaft an der Radarsignalquelle zu fixieren.

In anderen Worten wird die Radarsignalquelle auf dem Träger positioniert und anschließend mithilfe der Vergussmasse permanent auf dem Träger fixiert. Dabei kann die Vergussmasse eine Verbindung bzw. Brücke zwischen dem Träger und der Radarsignalquelle ausbilden, so dass die Radarsignalquelle auf dem Träger niedergehalten wird. Dies kann den Vorteil mit sich bringen, dass keine Feuchtigkeit zwischen dem Träger und der Radarsignalquelle eindringen kann.

Gemäß einem Ausführungsbeispiel kann das Verfahren ferner die Schritte aufweisen:
- Montieren eines Gehäuses, welches die Radarsignalquelle und/oder den Träger zumindest teilweise umhaust,
- Auffüllen eines Hohlraums innerhalb des Gehäuses mit der Vergussmasse. In anderen Worten wird die Radarsignalquelle und der Träger mittels eines Gehäuses umhaust bzw. geschützt. Dabei kann das Gehäuse mittels einer Schraubverbindung oder Ähnlichem an einem Bauteil festgelegt werden, an welchem auch der Träger festgelegt werden kann. Dabei kann zwischen dem Träger, welcher die Radarsignalquelle umfasst, und dem Gehäuse ein Hohlraum entstehen, welcher mittels der Vergussmasse aufgefüllt werden kann, so dass eine Verbindung zwischen der Radarsignalquelle, dem Träger und dem Gehäuse entsteht, so dass alle Komponenten vor eindringender Feuchtigkeit oder anderen Umwelteinflüssen geschützt sind.

Merkmale und Elemente des Messgeräts, so wie voranstehend und nachfolgend beschrieben, können Merkmale, Elemente und Schritte des Verfahrens, so wie voranstehend und nachfolgend beschrieben, sein und umgekehrt.

Im Folgenden werden Ausführungsbeispiele der Erfindung unter Bezugnahme auf die Figuren beschrieben.

### Kurze Beschreibung der Figuren

Fig. 1 zeigt einen schematischen Schnitt eines Radarmoduls gemäß einem Ausführungsbeispiel.
Fig. 2 zeigt einen schematischen Schnitt durch ein Radarmodul gemäß einem Ausführungsbeispiel.
Fig. 3 zeigt ein Flussdiagramm zur Illustration von Schritten eines Verfahrens zum Herstellen eines Radarmoduls gemäß einem Ausführungsbeispiel der Erfindung.
Fig. 4 zeigt einen Ausschnitt eines Radarmoduls gemäß einem Ausführungsbeispiel der Erfindung.

Die Figuren sind lediglich schematisch und nicht maßstabsgetreu. In den Figuren können gleiche, gleichwirkende oder ähnliche Elemente mit gleichen Bezugszeichen versehen sein.

### Detaillierte Beschreibung von Ausführungsbeispielen

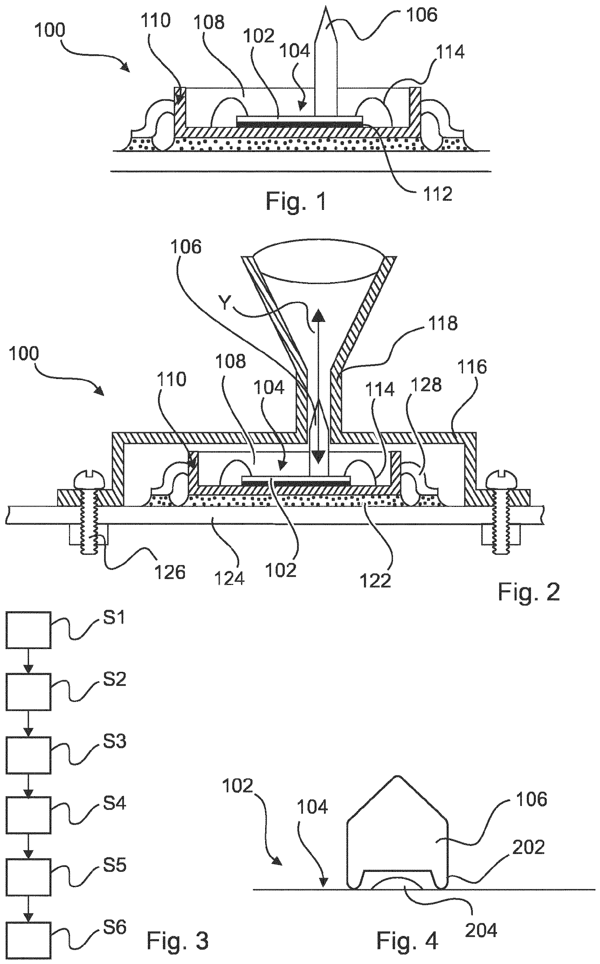

Fig. 1 zeigt einen schematischen Schnitt durch das Radarmodul 100 gemäß einem Ausführungsbeispiel. Das Radarmodul 100 weist dabei eine Radarsignalquelle auf 102, welche an einem Träger 110 mittels einer form-, stoff- und/oder kraftschlüssigen Verbindung 112 festgelegt ist.

Die kraftschlüssige Verbindung ist beispielsweise ein Kleber, der sich von der Vergussmasse unterscheidet. Dieser ist in den Figuren 1 und 2 durch die dicke, schwarze Schicht zwischen Träger 110 und Radarsignalquelle 102 dargestellt werden.

Die Radarsignalquelle 102 weist dabei eine Oberfläche 104 auf, welche einem Füllgut zugewandt ist. Auf der Oberfläche 104 ist der Radarsignalleiter 106 angeordnet. Der Radarsignalleiter 106 ist an der Radarsignalquelle 102 mittels einer Vergussmasse 108 befestigt. Die Vergussmasse 108 legt auch die Radarsignalquelle an dem Träger 110 fest. Die Radarsignalquelle 102 steht in Signalverbindung mit dem Träger 110 mittels eines Bonddrahts 114. Auch der Bonddraht 114 ist von der Vergussmasse 108 bedeckt, so dass auch dieser vor Umwelteinflüssen geschützt ist. Somit kann mithilfe der Vergussmasse 108 eine hohe Dichtheit des Radarmoduls 100 gewährleistet werden, insbesondere ist die Radarsignalquelle 102 und deren Kontaktierung vor Umwelteinflüssen geschützt sowie ihre Stabilität gegen mechanische Einflüsse verbessert.

Fig. 2 zeigt einen schematischen Schnitt eines Radarmoduls gemäß einem Ausführungsbeispiel. Das Radarmodul 100 ist mittels Schrauben 126 an einem Bauteil 124, beispielsweise einer Leiterplatte, angeordnet. Zu den Schrauben 126 besteht eine weitere form-, stoff- und/oder kraftschlüssige Verbindung 122 zwischen dem Radarmodul 100 und dem Bauteil 124. Die stoff-, form- und/oder kraftschlüssige Verbindung 122 legt den Träger 110 an dem Bauteil 124 fest. Zudem kann der Träger 110 in Signalverbindung mittels Bonddrähten 128 zu dem Bauteil 124 stehen. Der Träger 110 weist dabei eine Radarsignalquelle 102 auf, welche eine Oberfläche 104 aufweist. Die Radarsignalquelle ist mittels der Vergussmasse 108 an dem Träger 110 festgelegt. Das Radarmodul 100 weist zudem ein Gehäuse 116 auf. Das Gehäuse 116 weist zudem einen Hohlleiter 118 auf, welcher eine Hornantenne und eine dielektrische Linse umfassen kann. Der Radarsignalleiter 106 ragt dabei in den Hohlleiter 118 hinein. Dabei überlappen sich der Hohlleiter 118 und der Radarsignalleiter 106 entlang einer Axialrichtung Y, welche bevorzugt orthogonal zur Oberfläche 104 ausgerichtet ist. Durch die Überlappung kann eine Varianz in der Erstreckungslänge der Verbindung 122 ausgeglichen bzw. eine breite Toleranz der Verbindung 122 ermöglicht werden.

Fig. 3 zeigt ein Flussdiagramm zur Illustration von Schritten eines Verfahrens zur Herstellung eines Radarmoduls gemäß einem Ausführungsbeispiel. Das Flussdiagramm kann den Schritt Positionieren S1 umfassen, wobei ein Radarsignalleiter auf und/oder über einer Radarsignalquelle positioniert werden kann. Zudem kann das Flussdiagramm den Schritt Aufbringen S2 einer Vergussmasse umfassen, wobei eine Vergussmasse zumindest teilweise auf einem Radarsignalleiter und/oder der Radarsignalquelle aufgebracht wurde, um diese beiden Komponenten miteinander zu fixieren. Des Weiteren umfasst das Flussdiagramm den Schritt Positionieren S3, wobei eine Radarsignalquelle auf dem Träger positioniert werden kann. Zudem umfasst das Verfahren den Schritt Fixieren S4, wobei die Radarsignalquelle auf dem Träger mittels der Vergussmasse fixiert werden kann. Zudem kann das Flussdiagramm den Schritt Montieren S5 eines Gehäuses umfassen, wobei das Gehäuse die Radarsignalquelle und/oder den Träger zumindest teilweise umhaust. Ferner kann das Flussdiagramm den Schritt Auffüllen S6 eines Hohlraums innerhalb des Gehäuses mit der Vergussmasse umfassen.

Die Schritte des Verfahrens können in dieser Reihenfolge oder in jeder anderen erdenklichen Reihenfolge durchgeführt werden.

Fig. 4 zeigt einen schematischen Ausschnitt des Radarmoduls 100. Dabei weist die Radarsignalquelle 102 eine Oberfläche 104 auf. Die Radarsignalquelle umfasst dabei eine Antennenanordnung 204, welche auf der Oberfläche 104 angeordnet ist. Überhalb der Antennenanordnung 204 ist der Radarsignalleiter 106 angeordnet. Der Radarsignalleiter 106 kann dabei eine Art von Fuß 202 umfassen, welcher den Radarsignalleiter 106 zu der Antennenanordnung 204 beabstandet. Diese Anordnung kann sich insbesondere positiv auf die Einkopplung des Radarsignals auswirken, welches von der Antennenanordnung 204 ausgesendet wird und von dem Radarsignalleiter 106 aufgenommen wird. Insbesondere kann der Radarsignalleiter 106 auf der Radarsignalquelle mittels einer Vergussmasse 108 angeordnet sein, wobei die Füße 202 dafür sorgen, dass eine Antennenstruktur 204 frei von der Vergussmasse 108 verweilt.

## Patentansprüche

1. Radarmodul (100) zur Füllstands- und/oder Grenzstandsüberwachung, umfassend:
- eine Radarsignalquelle (102) eingerichtet zum Erzeugen, Aussenden und Empfangen eines Radarsignals,
wobei die Radarsignalquelle (102) eine Oberfläche (104) aufweist, welche einem Füllgut zugewandt ist,
- ein Radarsignalleiter (106) eingerichtet zum Aufnehmen, Leiten und Emittieren des Radarsignals,
wobei der Radarsignalleiter (106) auf der Oberfläche (104) der Radarsignalquelle (102) befestigt ist,
- eine Vergussmasse (108), wobei die Vergussmasse (108) zumindest teilweise die Oberfläche (104) der Radarsignalquelle (102) und zumindest teilweise den Radarsignalleiter (106) bedeckt,
**dadurch gekennzeichnet, dass**
das Radarmodul (100) einen Träger (110) umfasst,
wobei die Radarsignalquelle (102) mittels der Vergussmasse (108) an dem Träger (110) festgelegt ist.

2. Radarmodul gemäß Anspruch 1, wobei die Vergussmasse (108) den Radarsignalleiter (106) an der Oberfläche (104) der Radarsignalquelle (102) fixiert.

3. Radarmodul gemäß einem der vorherigen Ansprüche, wobei eine Permittivität der Vergussmasse (108) kleiner als eine Permittivität des Radarsignalleiters (106) ist.

4. Radarmodul gemäß Anspruch 1, wobei die Radarsignalquelle (102) zusätzlich mittels einer Stoff-, form- und/oder kraftschlüssigen Verbindung (112) an dem Träger (110) festgelegt ist.

5. Radarmodul gemäß Anspruch 4, wobei eine Vergussmasse (108) vorgesehen ist, welche die Radarsignalquelle (102) an dem Träger (110) fixiert.

6. Radarmodul gemäß einem der vorherigen Ansprüche, wobei das Radarmodul (100) ein Gehäuse (116) umfasst,
wobei das Gehäuse (116) zumindest die Oberfläche (104) der Radarsignalquelle (102) und/oder den Träger (110) umhaust.

7. Radarmodul gemäß Anspruch 6, wobei die Vergussmasse (108) die Radarsignalquelle (102) und/oder den Träger (110) nicht mit dem Gehäuse (116) verbindet.

8. Radarmodul gemäß einem der vorherigen Ansprüche, wobei das Radarmodul (100) einen Hohlleiter (118) aufweist,
wobei der Hohlleiter (118) eine Öffnung (120) aufweist,
wobei die Öffnung (120) eine Axialrichtung (Y) ausbildet,
wobei der Radarsignalleiter (106) in die Öffnung (120) derart hineinragt, dass der Hohlleiter (118) und der Radarsignalleiter (106) entlang der Axialrichtung (Y) eine Überlappung ausbilden, um das Radarsignal in den Hohlleiter (118) einzukoppeln.

9. Radarmodul gemäß einem der vorherigen Ansprüche, wobei die Vergussmasse (108) ein Kunststoffverbund, ein Kunstharzverbund, eine Folie und/oder eine mit Additiven versehene Folie aufweist.

10. Füllstandradar, aufweisend ein Radarmodul nach einem der vorherigen Ansprüche.

11. Verwendung eines Radarmoduls nach einem der Ansprüche 1 bis 9 zur Füllstands- und/oder Grenzstandsüberwachung in der Anlagenautomatisierung.

12. Verfahren zur Herstellung eines Radarmoduls aufweisend die Schritte:
- Positionieren (S1) eines Radarsignalleiters (106) über und/oder auf einer Radarsignalquelle (102),
- Aufbringen (S2) einer Vergussmasse (108) zum zumindest teilweisen Bedecken des Radarsignalleiters (106) und der Radarsignalquelle (102) und zum Fixieren des Radarsignalleiters zur Radarsignalquelle, und **gekennzeichnet durch** die folgende Schritte:
- Positionieren (S3) der Radarsignalquelle auf einem Träger (110),
- Fixieren (S4) der Radarsignalquelle (102) auf dem Träger mittels der Vergussmasse (108).

13. Verfahren gemäß Anspruche 12, ferner aufweisend die Schritte:
- Montieren (S5) eines Gehäuses (116), welches die Radarsignalquelle (102) und/oder den Träger (110) zumindest teilweise umhaust,
- Auffüllen (S6) eines Hohlraums innerhalb des Gehäuses (116) mit der Vergussmasse (108).

## Claims

1. A radar module (100) for level and/or limit monitoring, comprising:
- a radar signal source (102) configured to generate, transmit and receive a radar signal,
wherein the radar signal source (102) comprises a surface (104) which faces a filling material,
- a radar signal conductor (106) configured to receive, conduct and emit the radar signal,
wherein the radar signal conductor (106) is attached to the surface (104) of the radar signal source (102),
- a casting compound (108), the casting compound (108) at least partially covering the surface (104) of the radar signal source (102) and at least partially covering the radar signal conductor (106), **characterized in that**
the radar module (100) comprises a carrier (110),
wherein the radar signal source (102) is fixed to the carrier (110) by the casting compound (108).

2. The radar module of claim 1, wherein the casting compound (108) fixes the radar signal conductor (106) to the surface (104) of the radar signal source (102).

3. The radar module according to any one of the preceding claims, wherein a permittivity of the casting compound (108) is smaller than a permittivity of the radar signal conductor (106).

4. The radar module according to claim 1, wherein the radar signal source (102) is additionally fixed to the carrier (110) by means of a material-, form- and/or forcelocking connection (112).

5. The radar module according to claim 4, wherein a casting compound (108) is provided, which fixes the radar signal source (102) to the carrier (110).

6. The radar module according to any one of the preceding claims, wherein the radar module (100) comprises a housing (116),
wherein the housing (116) encloses at least the surface (104) of the radar signal source (102) and/or the carrier (110).

7. The radar module according to claim 6, wherein the casting compound (108) does not connect the radar signal source (102) and/or the carrier (110) to the housing (116).

8. The radar module according to any one of the preceding claims, wherein the radar module (100) comprises a waveguide (118),
wherein the waveguide (118) comprises an opening (120),
wherein the opening (120) forms an axial direction (Y),
wherein the radar signal conductor (106) protrudes into the opening (120) such that the waveguide (118) and the radar signal conductor (106) form an overlap along the axial direction (Y) to couple the radar signal into the waveguide (118).

9. The radar module according to any one of the preceding claims, wherein the casting compound (108) comprises a plastic composite, a synthetic resin composite, a foil and/or a foil provided with additives.

10. A radar level sensor, comprising a radar module according to any one of the preceding claims.

11. A use of a radar module according to any one of claims 1 to 9 for level monitoring and/or limit level monitoring in plant automation.

12. A method for producing a radar module comprising the steps of:
- positioning (S1) a radar signal conductor (106) over and/or on a radar signal source (102),
- depositing (S2) a casting compound (108) to at least partially cover the radar signal conductor (106) and the radar signal source (102) and to fix the radar signal conductor to the radar signal source, and **characterized by** the following steps:
- positioning (S3) the radar signal source on a carrier (110),
- fixing (S4) the radar signal source (102) to the carrier by means of the casting compound (108).

13. The method according to claim 12, further comprising the steps of:
- mounting (S5) a housing (116) that encloses the radar signal source (102) and/or the carrier (110) at least partially,
- filling (S6) a cavity within the housing (116) with the casting compound (108).

## Revendications

1. Module radar (100) pour la surveillance de niveau de remplissage et/ou de niveau limite, comprenant :
- une source de signal radar (102) conçue pour générer, envoyer et recevoir un signal radar, la source de signal radar (102) présentant une surface (104) qui est tournée vers un produit de remplissage,
- un guide de signal radar (106) conçu pour recevoir, guider et émettre le signal radar, le guide de signal radar (106) étant fixé sur la surface (104) de la source de signal radar (102),
- une masse de scellement (108), la masse de scellement (108) recouvrant au moins partiellement la surface (104) de la source de signal radar (102) et au moins partiellement le guide de signal radar (106),
**caractérisé en ce que**
le module radar (100) comprend un support (110),
la source de signal radar (102) étant fixée au support (110) au moyen de la masse de scellement (108).

2. Module radar selon la revendication 1, dans lequel la masse de scellement (108) fixe le guide de signal radar (106) à la surface (104) de la source de signal radar (102).

3. Module radar selon l'une des revendications précédentes, dans lequel une permittivité de la masse de scellement (108) est inférieure à une permittivité du guide de signal radar (106).

4. Module radar selon la revendication 1, dans lequel la source de signal radar (102) est en outre fixée au support (110) au moyen d'une liaison par matière, par forme et/ou par force (112).

5. Module radar selon la revendication 4, dans lequel il est prévu une masse de scellement (108) qui fixe la source de signal radar (102) au support (110).

6. Module radar selon l'une des revendications précédentes, dans lequel le module radar (100) comprend un boîtier (116), le boîtier (116) entourant au moins la surface (104) de la source de signal radar (102) et/ou le support (110).

7. Module radar selon la revendication 6, dans lequel la masse de scellement (108) ne relie pas la source de signal radar (102) et/ou le support (110) au boîtier (116).

8. Module radar selon l'une des revendications précédentes, dans lequel le module radar (100) présente un guide d'ondes (118) ,
le guide d'ondes (118) présente une ouverture (120), l'ouverture (120) forme une direction axiale (Y),
le guide de signal radar (106) s'étend dans l'ouverture (120) de telle sorte que le guide d'ondes (118) et le guide de signal radar (106) forment un chevauchement le long de la direction axiale (Y) afin de coupler le signal radar dans le guide d'ondes (118).

9. Module radar selon l'une des revendications précédentes, dans lequel la masse de scellement (108) présente une matière plastique composite, une résine synthétique composite, un film et/ou un film pourvu d'additifs.

10. Radar de niveau de remplissage présentant un module radar selon l'une des revendications précédentes.

11. Utilisation d'un module radar selon l'une des revendications 1 à 9 pour la surveillance de niveau de remplissage et/ou de niveau limite dans l'automatisation d'installations.

12. Procédé de fabrication d'un module radar comprenant les étapes consistant à :
- positionner 2(S1) un guide de signal radar (106) au-dessus et/ou sur une source de signal radar (102),
- appliquer (S2) une masse de scellement (108) pour recouvrir au moins partiellement le guide de signal radar (106) et la source de signal radar (102) et pour fixer le guide de signal radar à la source de signal radar,
et **caractérisé par** les étapes consistant à :
- positionner (S3) la source de signal radar sur un support (110),
- fixer (S4) la source de signal radar (102) sur le support au moyen de la masse de scellement (108).

13. Procédé selon la revendication 12, présentant en outre les étapes consistant à :
- monter (S5) un boîtier (116) entourant au moins partiellement la source de signal radar (102) et/ou le support (110),
- remplir (S6) une cavité à l'intérieur du boîtier (116) avec la masse de scellement (108).
